(19) **Europäisches Patentamt**

**European Patent Office**

**Office européen des brevets**

(11) Veröffentlichungsnummer: **0 209 807**
**A2**

# (12) EUROPÄISCHE PATENTANMELDUNG

(21) Anmeldenummer: 86109485.2

(22) Anmeldetag: 11.07.86

(51) Int. Cl.⁴: **C08G 18/38 , C08G 18/64**

Ein Antrag gemäss Regel 88 EPÜ auf Berichtigung der Beschreibung liegt vor. Über diesen Antrag wird im Laufe des Verfahrens vor der Prüfungsabteilung eine Entscheidung getroffen werden (Richtlinien für die Prüfung im EPA, A-V, 2.2).

(30) Priorität: 24.07.85 DE 3526413

(43) Veröffentlichungstag der Anmeldung:
28.01.87 Patentblatt 87/05

(84) Benannte Vertragsstaaten:
BE DE FR GB IT

(71) Anmelder: **BASF Aktiengesellschaft**
**Carl-Bosch-Strasse 38**
**D-6700 Ludwigshafen(DE)**

(72) Erfinder: **Strähle, Wolfgang, Dr.**
**Hampenweg 9**
**D-6900 Heidelberg(DE)**
Erfinder: **Marx, Matthias, Dr.**
**Feuerhausstrasse 11 A**
**D-8080 Fürstenfeldbruck(DE)**
Erfinder: **Schütt, Uwe**
**Am Weiher 14**
**D-8891 Obergriesbach(DE)**

(54) **Verfahren zur Herstellung von hochtemperaturbeständigen, kompakten oder zelligen Polyurethan-Elastomeren.**

㊗ Die Erfindung betrifft ein Verfahren zur Herstellung von hochtemperaturbeständigen, kompakten oder zelligen Polyurethan-Elastomeren durch Umsetzung, vorzugsweise nach der Niederdruck-Verfahrenstechnik, von

a) organischen Polyisocyanaten, vorzugsweise in Form von NCO-Gruppen enthaltenden Prepolymeren und/oder modifizierten Urethangruppen enthaltenden organischen Polyisocyanaten mit

b) höhermolekularen Verbindungen mit mindestens zwei reaktiven Wasserstoffatomen,

c) Harnstoffderivaten und gegebenenfalls

d) Kettenverlägerungs-und/oder Vernetzungsmitteln in Gegenwart von

e) Katalysatoren und gegebenenfalls

f) Treibmitteln,

g) Hilfsmitteln und/oder Zusatzstoffen, wobei als Harnstoffderivate mit Amino-und/oder Hydroxylgruppen substituierte Harnstoffe und/oder Polyharnstoffe, mit Molekulargewichten von 200 bis 4000 verwendet werden, die hergestellt werden durch Umsetzung von organischen Diisocyanaten mit primären aliphatischen und/oder cycloaliphatischen Diaminen und/oder Alkanolaminen im Molverhältnis 1:1,1 bis 1:2, zweckmäßigerweise in Gegenwart von Polyester-oder Polyether-polyolen als Lösungs-oder Verdünnungsmittel.

## Verfahren zur Herstellung von hochtemperaturbeständigen, kompakten oder zelligen Polyurethan-Elastomeren

Die Herstellung von kompakten oder zelligen Polyurethan-Elastomeren durch Umsetzung von organischen Polyisocyanaten mit organischen Polyhydroxylverbindungen in Gegenwart von Katalysatoren und gegebenenfalls Kettenverlängerungs- und/oder Vernetzungsmitteln sowie Treibmitteln, Hilfsmitteln und/oder Zusatzstoffen ist bekannt. Bei geeigneter Wahl der Hydroxylgruppen aufweisenden Polyester, Polyether, Polyesteramide u.a. und organischen Polyisocyanate sowie durch die zusätzliche Mitverwendung von Kettenverlängerungsmitteln, wie z.B. Glykolen, dreiwertigen Alkoholen und/oder Diaminen, können nach dieser Methode sowohl elastische wie starre, gegebenenfalls zellige Polyurethan-Elastomere sowie alle dazwischen liegende Modifikationen hergestellt werden.

Die Herstellung von Polyurethan-Elastomeren, deren mechanische Eigenschaften und Verwendung wird beispielsweise beschrieben in den Monographien High Polymers, Band XVI, "Polyurethanes", Teil I und II von I.H. Saunders und K.C. Frisch (Verlag Interscience Publishers, New York, 1962 bzw. 1964) und Kunststoff-Handbuch, Band VII, Polyurethane, 1966 und 1983 von R. Vieweg und A. Höchtlen bzw. G. Oertel (Carl-Hanser-Verlag, München).

Zur Herstellung der Polyurethan-Elastomeren werden nach der DE-A-831 604 (US-PS 2 778 810) aus den Hydroxylgruppen enthaltenden höhermolekularen Verbindungen und organischen Polyisocyanaten zunächst NCO-gruppenhaltige Prepolymere hergestellt, die dann in einer zweiten Stufe mit dem Kettenverlängerungsmittel, z.B. Diolen oder Diaminen, zum hochmolekularen Elastomeren umgesetzt werden.

Diamine konnten aufgrund ihrer hohen Reaktivität im allgemeinen nicht nach dem one shot-Verfahren verarbeitet werden. Die Entwicklung der Hochdruck-RIM-Technik ermöglichte jedoch die Herstellung von gegebenenfalls zelligen, elastischen Formkörpern mit einer kompakten Oberflächenschicht aus Polyurethan-Polyharnstoff-Elastomeren durch Umsetzung eines one shot-Systems, das im wesentlichen aus organischen Polyisocyanaten, Polyolen, aromatischen Di-bzw. Polyaminen, deren Aminogruppen durch orthoständige Alkylsubstituenten sterisch behindert sind, und einem starken Katalysator für die Reaktion zwischen Hydroxyl-und Isocyanatgruppen bestand, in einem geschlossenen Formwerkzeug. Derartige Verfahren werden beispielsweise in der DE-A-26 22 951 (US-PS 4 218 543) und den EP-A-26 915 und 69 286 beschrieben.

Aus der EP-A-19 213 ist ferner bekannt, daß in einem speziellen Verfahren zur Verminderung hoher Gasdrucke bei der Herstellung von Polyurethan-Elastomeren niedermolekulare aromatische Diamine mitverwendet werden. Die zugesetzten Diamine ergeben in Kombination mit Glykolen und größeren Mengen Wasser als Vernetzungsmittel und zur Bildung von Kohlendioxid als Treibmittel Polyurethan-Elastomere mit einer Dichte von 0,45 bis 0,8 g/cm³ und einer erhöhten Wärmestandfestigkeit.

Für den Arbeitssicherheitsschuh werden heute vielfach Polyurethan-Elastomere als Sohlenmaterial verwendet. Diese Produkte besitzen im Vergleich zu Gummi eine bessere Abriebbeständigkeit, beginnen jedoch bei relativ niedrigen Temperaturen zu erweichen bzw. zu schmelzen. Aus diesem Grund war die Verwendung von Polyurethanschuhsohlen auf den normalen Arbeitssicherheitsschuh beschränkt.

Die Wärmeformbeständigkeit der Polyurethan-Elastomeren konnte zwar durch die Verwendung von aromatischen Diaminen anstelle von Diolen als Kettenverlängerungsmittel verbessert werden. Der Nachteil von Diamine enthaltenden Polyurethan-Elastomer-Systemen besteht jedoch darin, daß sie nur nach dem Hochdruck-RIM-Verfahren verarbeitet werden können. Schuhsohlen auf Polyurethanbasis werden heute jedoch noch fast ausschließlich nach dem Niederdruck-Verfahren hergestellt.

Die Aufgabe der vorliegenden Erfindung bestand darin, gegebenenfalls zellige Polyurethan-Elastomere mit verbesserter Hochtemperaturbeständigkeit zu entwickeln, die als Sohlenmaterial für Arbeitssicherheitsschuhe verwendet werden können und wobei die Polyurethan-Systeme zu deren Herstellung nach der Niederdruck-Verfahrenstechnik verarbeitet werden können.

Diese Aufgabe konnte überraschenderweise durch die Mitverwendung von speziellen Harnstoffderivaten als Aufbaukomponente zur Herstellung der Polyurethan-Elastomeren gelöst werden.

Gegenstand der Erfindung ist somit ein Verfahren zur Herstellung von kompakten oder zelligen Polyurethan-Elastomeren durch Umsetzung von

a) organischen Polyisocyanaten mit

b) höhermolekularen Verbindungen mit mindestens 2 reaktiven Wasserstoffatomen und gegebenenfalls

d) Kettenverlängerungs-und/oder Vernetzungsmitteln in Gegenwart von

e) Katalysatoren und gegebenenfalls

f) Treibmitteln,

g) Hilfsmitteln und/oder Zusatzstoffen,

das dadurch gekennzeichnet ist, daß man zusätzlich als Aufbaukomponente (c) mit Amino- und/oder Hydroxylgruppen substituierte Harnstoffe und/oder Polyharnstoffe mitverwendet.

Die mit Amino-und/oder Hydroxylgruppen substituierte Harnstoffe und/oder Polyharnstoffe enthaltende Polyurethan-Elastomer-Systeme können problemlos auf Niederdruckmaschinen verarbeitet werden und die erhaltenen Polyurethan-Elastomeren besitzen im Vergleich zu konventionellen Elastomeren eine um ungefähr 30 bis 40°C verbesserte Wärmeformbeständigkeit.

Zu den für das erfindungsgmeäße Verfahren verwendbaren Ausgangskomponenten (a) bis (c) und (e) und gegebenenfalls (d), (f) und (g) zur Herstellung der kompakten oder vorzugsweise zelligen Polyurethan-Elastomeren ist folgendes auszuführen:

a) Als organische Polyisocyanate kommen die an sich bekannten aliphatischen, cycloaliphatischen, araliphtischen und vorzugsweise aromatischen mehrwertigen Isocyanate in Frage.

Im einzelnen seien beispielhaft genannt: Alkylendiisocyanate mit 4 bis 12 Kohlenstoffatomen im Alkylenrest, wie 1,12-Dodecan-diisocyanat, 2-Ethyl-tetramethylen-diisocyanat-1,4, 2-Methyl-pentamethylen-diisocyanat-1,5-diisocyanat, Tetramethylen-diisocyanat-1,4 und vorzugsweise Hexamethylen-diisocyanat-1,6; cycloaliphatische Diisocyanate, wie Cyclohexan-1,3-und -1,4-diisocyanat sowie beliebige Gemische dieser Isomeren, 1-Isocyanato-3,3,5-trimethyl-5-isocyanatomethyl-cyclohexan (Isophoron-diisocyanat), 2,4-und 2,6-Hexahydrotoluylen-diisocyanat sowie entsprechende Isomerengemische, 4,4'-, 2,2'-und 2,4'-Dicyclohexylmethan-diisocyanat sowie die entsprechenden Isomerengemische und vorzugsweise aromatischen Di-und Polyisocyanate, wie z.B. 2,4-und 2,6-Toluylen-diisocyanat und die entsprechenden Isomerengemische, 4,4'-, 2,4'-und 2,2'-Diphenylmethan-diisocyanat und die entsprechenden Isomerengemische, Mischungen aus 4,4'-und 2,4'-Diphenylmethandiisocyanaten, Polyphenyl-polymethylenpolyisocyanate, Mischungen aus 4,4'-, 2,4'-, 2,2'-Diphenylmethan-diisocyanaten und Polyphenyl-polymethylen-polyisocyanaten (Roh-MDI) und Mischungen aus Roh-MDI und Toluylen-diisocyanaten. Die organischen Di-und Polyisocyanate können einzeln oder in Form von Mischungen eingesetzt werden.

Häufig werden auch sogenannte modifizierte mehrwertige Isocyanate, d.h. Produkte, die durch chemische Umsetzung organischer Di-und/oder Polyisocyanate erhalten werden, verwendet. Beispielhaft genannt seien Ester-, Harnstoff-, Biuret-, Allophanat-, Carbodiimid-, Isocyanurat-und/oder Urethangruppen enthaltende Di-und/oder Polyisocyanate. Im einzelnen kommen beispielsweise in Betracht: Urethangruppen enthaltende organische, vorzugsweise aromatische Polyisocyanate mit NCO-Gehalten von 33,6 bis 15 Gew.%, vorzugsweise von 31 bis 21 Gew.%, bezogen auf das Gesamtgewicht, beispielsweise mit niedermolekularen Diolen, Triolen, Dialkylenglykolen, Trialkylenglykolen oder Polyoxyalkylen-glykolen mit Molekulargewichten bis 800 modifiziertes 4,4'-Diphenylmethan-diisocyanat oder 2,4-bzw. 2,6-Toluylen-diisocyanat, wobei als Di-bzw. Polyoxyalkylen-glykole, die einzeln oder als Gemische eingesetzt werden können, beispielsweise genannt seien: Diethylen-, Dipropylen-, Polyoxyethylen-, Polyoxypropylen-und Polyoxypropylen-polyoxyethylen-glykole. Geeignet sind auch NCO-Gruppen enthaltende Prepolymere mit NCO-Gehalten von 25 bis 9 Gew.%, vorzugsweise von 21 bis 14 Gew.%, bezogen auf das Gesamtgewicht, hergestellt aus den nachfolgend beschriebenen Polyether-und/oder vorzugsweise Polyester-polyolen und 4,4'-Diphenylmethan-diisocyanat, Mischungen aus 2,4'-und 4,4'-Diphenylmethan-diisocyanat, 2,4-und/oder 2,6-Toluylen-diisocyanaten oder Roh-MDI. Bewährt haben sich ferner flüssige Carbodiimidgruppen und/oder Isocyanuratringe enthaltende Polyisocyanate mit NCO-Gehalten von 33,6 bis 15, vorzugsweise 31 bis 21 Gew.%, bezogen auf das Gesamtgewicht, z.B. auf Basis von 4,4'-, 2,4'-und/oder 2,2'-Diphenylmethan-diisocyanat und/oder 2,4-und/oder 2,6-Toluylen-diisocyanat.

Die modifizierten Polyisocyanaten können miteinander oder mit unmodifizierten organischen Polyisocyanaten wie z.B. 2,4'-, 4,4'-Diphenylmethan-diisocyanat, Roh-MDI, 2,4-und/oder 2,6-Toluylen-diisocyanat gegebenenfalls gemischt werden.

Besonders bewährt haben sich als organische Polyisocyanate und daher kommen vorzugsweise zur Anwendung: NCO-Gruppen enthaltende Prepolymere mit einem NCO-Gehalt von 25 bis 9 Gew.%, insbesondere auf Basis von Polyether-oder Polyester-polyolen und einem oder mehreren Diphenylmethan-diisocyanat-Isomeren, vorteilhafterweise 4,4'-Diphenylmethan-diisocyanat und/oder modifizierte Urethangruppen enthaltende organische Polyisocyanate mit einem NCO-Gehalt von 33,6 bis 15 Gew.%, insbesondere auf Basis von 4,4'-Diphenylmethan-diisocyanat oder Diphenylmethan-diisocyanat-Isomerengemischen.

(b) Als höhermolekulare Verbindungen (b) mit mindestens zwei reaktiven Wasserstoffatomen werden zweckmäßigerweise solche mit einer Funktionalität von 2 bis 8, vorzugsweise 2 bis 4 und einem Molekulargewicht von 800 bis 8000, vorzugsweise von 1200 bis 6000 verwendet. Bewährt haben sich z.B. Polyether-polyamine und/oder vorzugsweise Polyole ausgewählt aus der Gruppe der Polyether-polyole, Polyester-polyole, Polythioether-polyole, Polyesteramide, hydroxylgruppenhaltigen Polyacetale und hydroxylgruppenhaltigen aliphatischen Polycarbonate oder Mischungen aus mindestens zwei der genannten Polyole. Vorzugsweise Anwendung finden Polyester-polyole und/oder Polyether-polyole.

Geeignete Polyester-polyole können beispielsweise aus organischen Dicarbonsäuren mit 2 bis 12 Kohlenstoffatomen, vorzugsweise aliphatischen Dicarbonsäuren mit 4 bis 6 Kohlenstoffatomen und mehrwertigen Alkoholen, vorzugsweise Diolen, mit 2 bis 12 Kohlenstoffatomen, vorzugsweise 2 bis 6 Kohlenstoffatomen hergestellt werden. Als Dicarbonsäuren kommen beispielsweise in Betracht: Bernsteinsäure, Glutarsäure, Adipinsäure, Korksäure, Azelainsäure, Sebacinsäure, Decandicarbonsäure, Maleinsäure und Fumarsäure. Die Dicarbonsäuren können dabei sowohl einzeln als auch im Gemisch untereinander verwendet werden. Anstelle der freien Dicarbonsäuren können auch die entsprechenden Dicarbonsäurederivate, wie z.B. Dicarbonsäureester von Alkoholen mit 1 bis 4 Kohlenstoffatomen oder Dicarbonsäureanhydride eingesetzt werden. Vorzugsweise verwendet werden Dicarbonsäuregemische aus Bernstein-, Glutar-und Adipinsäure in Mengenverhältnissen von beispielsweise 20 bis 35 : 35 bis 50 : 20 bis 32 Gew.-Teilen, und insbesondere Adipinsäure. Beispiele für zwei-und mehrwertige Alkohole, insbesondere Diole sind: Ethandiol, Diethylenglykol, 1,2-bzw. 1,3-Propandiol, Dipropylenglykol, 1,4-Butandiol, 1,5-Pentandiol, 1,6-Hexandiol, 1,10-Decandiol, Glycerin und Trimethylolpropan. Vorzugsweise verwendet werden Ethandiol, Diethylenglykol, 1,4-Butandiol, 1,5-Pentandiol, 1,6-Hexandiol oder Mischungen aus mindestens zwei der genannten Diole, insbesondere Mischungen aus 1,4-Butandiol, 1,5-Pentandiol und 1,6-Hexandiol. Eingesetzt werden können ferner Polyester-polyole aus Lactonen, z.B. ε-Caprolacton oder Hydroxycarbonsäuren, z.B. ω-Hydroxycapronsäure.

Die Polyester-polyole besitzen vorzugsweise eine Funktionalität von 2 bis 3 und ein Molekulargewicht von 800 bis 3.000, vorzugsweise 1.200 bis 3000 und insbesondere 1.800 bis 2.500.

Insbesondere als Polyole verwendet werden jedoch Polyether-polyole, die nach bekannten Verfahren, beispielsweise durch anionische Polymerisation mit Alkalihydroxiden, wie Natrium-oder Kaliumhydroxid oder Alkalialkoholaten, wie Natriummethylat, Natrium-oder Kaliumethylat oder Kaliumisopropylat als Katalysatoren oder durch kationische Polymerisation mit Lewis-Säuren, wie Antimonpentachlorid, Borfluorid-Etherat u.a. oder Bleicherde als Katalysatoren aus einem oder mehreren Alkylenoxiden mit 2 bis 4 Kohlenstoffatomen im Alkylenrest und einem Startermolekül, das 2 bis 8, vorzugsweise 2 bis 4 reaktive Wasserstoffatome gebunden enthält, hergestellt werden.

Geeignete Alkylenoxide sind beispielsweise Tetrahydrofuran, 1,3-Propylenoxid, 1,2-bzw. 2,3-Butylenoxid, Styroloxid, Epichlorhydrin und vorzugsweise Ethylenoxid und 1,2-Propylenoxid. Die Alkylenoxide können einzeln, alternierend nacheinander oder als Mischungen verwendet werden. Als Startermoleküle kommen beispielsweise in Betracht: Wasser, organische Dicarbonsäuren, wie Bernsteinsäure, Adipinsäure, Phthalsäure und Terephthalsäure, aliphatische und aromatische, gegebenenfalls N-mono-, N,N-und N,N'-dialkylsubstituierte Diamine mit 1 bis 4 Kohlenstoffatomen im Alkylrest, wie gegebenenfalls mono-und dialkylsubstituiertes Ethylendiamin, Diethylentriamin, Triethylentetramin, 1,3-Propylendiamin, 1,3-bzw. 1,4-Butylendiamin, 1,2-, 1,3-, 1,4-, 1,5-und 1,6-Hexamethylendiamin, Phenylendiamine, 2,4-und 2,6-Toluylendiamin und 4,4'-, 2,4'-und 2,2'-Diamino-diphenylmethan.

Als Startermoleküle kommen ferner in Betracht Alkanolamine, wie Ethanolamin, Diethanolamin, N-Methyl-und N-Ethyl-ethanolamin, N-Methyl-und N-Ethyl-diethanolamin und Triethanolamin, Ammoniak, Hydrazin und Hydrazide. Vorzugsweise verwendet werden mehrwertige, insbesondere zwei-und/oder dreiwertige Alkohole, wie Ethandiol, Propandiol-1,2 und -1,3, Diethylenglykol, Dipropylenglykol, Butandiol-1,4, Hexandiol-1,6, Glycerin, Trimethylol-propan, Pentaerythrit, Sorbit und Saccharose.

Die Polyether-polyole besitzen eine Funktionalität von vorzugsweise 2 bis 4 und insbesondere 2 und 3 und Molekulargewichte von 800 bis 8.000, vorzugsweise 1.200 bis 6.000 und insbesondere 1.800 bis 4.000. Sie können ebenso wie die Polyester-polyole einzeln oder in Form von Mischungen verwendet werden. Ferner können sie mit den Polyester-polyolen sowie den hydroxylgruppenhaltigen Polyesteramiden, Polyacetalen, Polycarbonaten und/oder Polyether-polyaminen gemischt werden.

Als hydroxylgruppenhaltige Polyacetale kommen z.B. die aus Glykolen, wie Diethylenglykol, Triethylenglykol, 4,4'-Dihydroxyethoxy-diphenyldimethylmethan, Hexandiol und Formaldehyd herstellbaren Verbindungen in Frage. Auch durch Polymerisation cyclischer Acetale lassen sich geeignete Polyacetale herstellen.

Als Hydroxylgruppen aufweisende Polycarbonate kommen solche der an sich bekannten Art in Betracht, die beispielsweise durch Umsetzung von Diolen, wie Propandiol-1,3, Butandiol-1,4 und/oder Hexandiol-1,6, Diethylenglykol, Triethylenglykol oder Tetraethylenglykol mit Diarylcarbonaten, z.B. Diphenylcarbonat, oder Phosgen hergestellt werden können.

Zu den Polyesteramiden zählen z.B. die aus mehrwertigen gesättigten und/oder ungesättigten Carbonsäuren bzw. deren Anhydriden und mehrwertigen gesättigten und/oder ungesättigten Aminoalkoholen oder Mischungen aus mehrwertigen Alkoholen und Aminoalkoholen und/oder Polyaminen gewonnen, vorwiegend linearen Kondensate.

Geeignete Polyether-polyamine können aus den obengenannten Polyetherpolyolen nach bekannten Verfahren hergestellt werden. Beispielhaft genannt seien die Cyanoalkylierung von Polyoxyalkylen-polyolen und anschließende Hydrierung des gebildeten Nitrils (US 3 267 050) oder die Aminierung von Polyoxyalkylen-polyolen mit Aminen oder Ammoniak in Gegenwart von Wasserstoff und Katalysatoren (DE 12 15 373).

c) Wesentliches Merkmal der vorliegenden Erfindung ist die Mitverwendung von mit Amino-und/oder Hydroxylgruppen substituierten Harnstoffen und/oder Polyharnstoffen zur Herstellung der kompakten und vorzugsweise zelligen Polyurethan-Elastomeren. Geeignete Harnstoffe und/oder Polyharnstoffe besitzen ein Molekulargewicht von 200 bis 4000, vorzugsweise von 370 bis 930 und werden hergestellt durch Umsetzung von organischen, beispielsweise aliphatischen, cycloaliphatischen und vorzugsweise aromatischen Diisocyanaten mit Alkanolaminen, primären cycloaliphatischen und/oder vorzugsweise aliphatischen Diaminen im Molverhältnis von zweckmäßigerweise 1:1,1 bis 1:2, vorzugsweise 1:1,5 bis 1:2,0.

Als organische Diisocyanate haben sich beispielsweise die bereits obengenannten unmodifizierten Diisocyanate bewährt, die auch zur Herstellung der gegebenenfalls zelligen Polyurethane Verwendung finden. Vorzugsweise eingesetzt werden die Diphenylmethan-diisocyanat-Isomeren, insbesondere 4,4'-Diphenylmethan-diisocyanat. Geeignete Alkanolamine besitzen 2 bis 12, vorzugsweise 2 bis 10 C-Atome im Alkylenrest. Beispielhaft genannt seien 1,3-, 1,2-Propanolamin, 1,4-Butanolamin, 1,5-Pentanolamin, 1,6-Hexanolamin, 1,8-Octanolamin, 1,10-Decanolamin und vorzugsweise Ethanolamin. Als cycloaliphatische und/oder vorzugsweise aliphatische primäre Diamine kommen solche mit 6 bis 10, vorzugsweise 6 C-Atomen im gegebenenfalls alkylsubstituierten Cycloalkylenrest und 2 bis 12, vorzugsweise 2 bis 6 C-Atomen im linearen oder verzweigten Alkylenrest in Betracht.

Als Beispiele genannt seien: p-bzw. m-Diamino-cyclohexan, 1-Methyl-2,4-bzw. -2,6-diamino-cyclohexan, 1,3-Dimethyl-2,4-bzw. -2,6-diaminocyclohexan, 1,3-bzw. 1,2-Diaminopropan, 1,5-Diamino-pentan, 2-Methyl-1,5-diamino-pentan, 1,8-Diamino-octan, 2-Ethyl-1,8-diaminooctan, 1,10-Diamino-decan, 1,12-Diamino-dodecan und vorzugsweise 1,2-Diaminoethan, 1,4-Diamino-butan und 1,6-Diamino-hexan. Die erfindungsgemäß verwendbaren Harnstoffe und/oder Polyharnstoffe können nach beliebigen Verfahren hergestellt werden. Vorzugsweise hergestellt werden sie jedoch in den zur Polyurethanherstellung geeigneten Polyolen, insbesondere den beschriebenen Polyether-oder Polyester-Polyolen als Lösungs-oder Verdünnungsmittel, beispielsweise bei Temperaturen von 20 bis 200°C, vorzugsweise von 30 bis 60°C. Die organischen Diisocyanate und Alkanolamine, cycloaliphatischen oder/und aliphatischen Diamine, die einzeln oder als Gemische eingesetzt werden können, kommen zweckmäßigerweise in solchen Mengen zur Anwendung, daß die resultierende Lösung oder Dispersion, bezogen auf 100 Gew.-Teile Polyol 0,1 bis 20 Gew.-Teile, vorzugsweise 0,2 bis 1,0 Gew.-Teile mit Amino-und/oder Hydroxylgruppen substituierte Harnstoffe und/oder Polyharnstoffe enthält. Die erhaltenen Lösungen oder Dispersionen können direkt oder nach Verdünnen mit höhermolekularen Verbindungen mit mindestens 2 reaktiven Wasserstoffatomen, vorzugsweise Polyolen, insbesondere Polyester-oder Polyether-polyolen, zu den Polyurethan-Elastomeren umgesetzt werden. Die erfindungsgemäß geeigneten Amino-und/oder Hydroxylgruppen enthaltenden Harnstoffe und/oder Polyharnstoffe werden zweckmäßigerweise in Mengen von 0,01 bis 15 Gew.-Teilen, vorzugsweise 0,1 bis 2 Gew.-Teilen und insbesondere 0,5 bis 1,0 Gew.-Teilen pro 100 Gew.-Teilen der Aufbaukomponente (b) verwendet.

(d) Die kompakten oder zelligen Polyurethan-Elastomeren können ohne oder unter Mitverwendung von Kettenverlängerungs-und/oder Vernetzungsmitteln hergestellt werden. Zur Modifizierung der mechanischen Eigenschaften, z.B. der Härte, hat sich jedoch der Zusatz von Kettenverlängerungsmittel, Vernetzungsmittel oder gegebenenfalls auch deren Gemische in Mengen von 2 bis 12 Gew.-Teilen, vorzugsweise von 4 bis 10 Gew.-Teilen bezogen auf 100 Gew.-Teile der Komponente (b) bewährt. Als Kettenverlängerungs-und/oder Vernetzungsmittel verwendet werden Diole und/oder Triole mit Molekulargewichten kleiner als 400, vorzugsweise von 60 bis 300. In Betracht kommen beispielsweise aliphatische, cycloaliphatische und/oder araliphatische Diole mit 2 bis 14, vorzugsweise 4 bis 10 Kohlenstoffatomen, wie Ethylenglykol, Propandiol-1,3, Decandiol-1,10, o-, m-, p-Dihydroxycyclohexan, Diethylenglykol, Dipropylenglykol und vorzugsweise Butandiol-1,4, Hexandiol1,6 und Bis-(2-hydroxyethyl)-hydrochinon, Triole, wie 1,2,4-, 1,3,5-Trihydroxy-cyclohexan, Glycerin und Trimethylolpropan und niedermolekulare hydroxylgruppenhaltige Polyalkylenoxide auf Basis Ethylen-und/oder 1,2-Propylenoxid und den vorgenannten Diolen und/oder Triolen als Startermoleküle.

(e) Als Katalysatoren (e) werden Verbindungen verwendet, die insbesondere die Reaktion der Hydroxylgruppen enthaltenden Ausgangskomponenten mit den Polyisocyanaten stark beschleunigen. In Betracht kommen organische Metallverbindungen, vorzugsweise organische Zinnverbindungen, wie Zinn-(II)-salze von organischen Carbonsäuren, z.B. Zinn-(II)-acetat, Zinn-(II)-octoat, Zinn-(II)-ethylhexoat und Zinn-(II)-laurat und die Dialkylzinn-(IV)-salze von organischen Carbonsäuren, z.B. Dibutylzinndiacetat, Dibutylzinn-dilaurat, Dibutylzinnmaleiat und Dioctylzinn-diacetat. Die organischen Metallverbindungen werden allein oder vorzugsweise in Kombination mit stark basischen Aminen eingesetzt. Genannt seien beispielsweise Amidine, wie 2,3-Dimethyl-3,4,5,6-tetrahydropyrimidin, tertiäre Amine, wie Triethylamin, Tributylamin, Dimethylbenzylamin, N-Methyl-, N-Ethyl-, N-Cyclohexylmorpholin, N,N,N',N'-Tetramethyl-ethylendiamin, N,N,N',N'-Diaminoethylether, Bis-(dimethylaminopropyl)-harnstoff, Dimethylpiperazin, 1,2-Dimethylimidazol, 1-Aza-bicyclo-(3,3,0)-octan und vorzugsweise 1,4-Diaza-bicyclo-(2,2,2)-octan und Alkanolaminverbindungen, wie Triethanolamin, Triisopropanolamin, N-Methyl-und N-Ethyl-diethanolamin und Dimethylethanolamin.

Als Katalysatoren kommen ferner in Betracht: Tris-(dialkylaminoalkyl)-s-hexahydrotriazine, insbesondere Tris-(N,N-dimethylaminopropyl)-s-hexahydrotriazin, Tetraalkylammoniumhydroxide, wie Tetramethylammoniumhydroxid, Alkalihydroxide, wie Natriumhydroxid und Alkalialkoholate, wie Natriummethylat und Kaliumisopropylat sowie Alkalisalze von langkettigen Fettsäuren mit 10 bis 20 C-Atomen und gegebenenfalls seitenständigen OH-Gruppen. Vorzugsweise verwendet wer den 0,001 bis 5 Gew.%, insbesondere 0,05 bis 2 Gew.% Katalysator bzw. Katalysatorkombination bezogen auf das Gewicht der Komponente (b).

(f) Als Treibmittel zur Herstellung der zelligen Polyurethan-Elastomeren wird Wasser verwendet, das mit Isocyanatgruppen unter Bildung von Kohlendioxid reagiert. Die Wassermengen, die zweckmäßigerweise eingesetzt werden, betragen 0,05 bis 1 Gew.%, vorzugsweise 0,1 bis 0,3 Gew.%, bezogen auf das Gewicht der Ausgangskomponente (b).

Andere verwendbare Treibmittel, die gegebenenfalls in Kombination mit Wasser Anwendung finden, sind niedrig siedende Flüssigkeiten, die unter dem Einfluß der exothermen Polyadditionsreaktion verdampfen. Geeignet sind Flüssigkeiten, welche gegenüber dem organischen Polyisocyanat inert sind und Siedepunkte unter 100°C aufweisen. Beispiele derartiger, vorzugsweise verwendeter Flüssigkeiten sind halogenierte Kohlenwasserstoffe, wie Methylenchlorid, Trichlorfluormethan, Dichlordifluormethan, Dichlormonofluormethan, Dichlortetrafluorethan und 1,1,2-Trichlor-1,2,2-trifluorethan. Auch Gemische dieser niedrigsiedenden Flüssigkeiten untereinander und/oder mit anderen substituierten oder unsubstituierten Kohlenwasserstoffen können verwendet werden.

Die zweckmäßigste Menge an niedrigsiedender Flüssigkeit zur Herstellung der zelligen Polyurethan-Elastomeren hängt ab von der Dichte, die man erreichen will und der eingesetzten Wassermenge. Im allgemeinen liefern Mengen von 1 bis 10 Gew.-Teilen, vorzugsweise von 2 bis 6 Gew.-Teilen, bezogen auf 100 Gew.-Teile der Komponente (e) zufriedenstellende Ergebnisse.

(g) Der Reaktionsmischung können gegebenenfalls auch noch Hilfsmittel und/oder Zusatzstoffe (g) einverleibt werden. Genannt seien beispielsweise oberflächenaktive Substanzen, Füllstoffe, Farbstoffe, Pigmente, Flammschutzmittel, Trennmittel, Hydrolyseschutzmittel, fungistatisch und bakteriostatisch wirkende Substanzen.

Als oberflächenaktive Substanzen kommen Verbindungen in Betracht, welche zur Unterstützung der Homogenisierung der Ausgangsstoffe dienen. Genannt seien beispielsweise Emulgatoren, wie die Natriumsalze von Ricinusölsulfaten oder von Fettsäuren sowie Salze von Fettsäuren mit Aminen, z.B. ölsaures Diethylamin oder stearinsaures Diethanolamin, Salze von Sulfonsäuren, z.B. Alkali-oder Ammoniumsalze von Dodecylbenzoloder Dinaphthylmethandisulfonsäure und Ricinolsäure. Die oberflächenaktiven Substanzen werden üblicherweise in Mengen von 0,01 bis 5 Gew.-Teilen, bezogen auf 100 Gew.-Teile der Komponente (b), angewandt.

Als Füllstoffe, insbesondere verstärkend wirkende Füllstoffe sind die an sich bekannten üblichen organischen und anorganischen Füllstoffe, Verstärkungsmittel, Beschwerungsmittel, Mittel zur Verbesserung des Abriebverhaltens in Anstrichfarben, Beschichtungsmittel usw. zu verstehen. Im einzelnen seien beispielhaft genannt: anorganische Füllstoffe wie silikatische Mineralien, beispielsweise Schichtsilikate, wie Antigorit, Serpentin, Hornblenden, Amphibole, Chrisotil, Talkum; Metalloxide, wie Kaolin, Aluminiumoxide, Titanoxide und Eisenoxide, Metallsalze wie Kreide, Schwerspat und anorganische Pigmente, wie Cadmiumsulfid, Zinksulfid sowie Asbestmehl u.a. Vorzugsweise verwendet werden Kaolin (China Clay), Aluminiumsilikat und Copräzipitate aus Bariumsulfat und Aluminiumsilikat sowie natürliche und synthetische faserförmige Mineralien wie Asbest und Wollastonit. Als organische Füllstoffe kommen beispielsweise in Betracht:

Kohle, Melamin, Kollophonium, Cyclopentadienylharze und Pfropfpolymerisate auf Styrol-Acrylnitrilbasis, die durch in situ Polymerisation von Acrylnitril-Styrol-Mischungen in Polyether-polyolen analog den Angaben der deutschen Patentschriften 11 11 394, 12 22 669 (US 3 304 273, 3 383 351, 3 523 093), 11 52 536 (GB 1 040 452) und 11 52 537 (GB 987 618) hergestellt werden, sowie Fillerpolyoxyalkylen-polyole, bei denen wäßrige Polymerdispersionen in Polyoxyalkylen-polyol-dispersionen übergeführt werden.

Die anorganischen und organischen Füllstoffe können einzeln oder als Gemische verwendet werden. Vorzugsweise Anwendung finden stabile Füllstoff-Polyoxyalkylen-polyol-Dispersionen, bei denen die Füllstoffe in Gegenwart von Polyoxyalkylen-polyolen in situ mit hohen örtlichen Energiedichten auf eine Teilchengröße kleiner als 7 µm zerkleinert und hierbei gleichzeitig dispergiert werden oder Pfropfpolymerisate auf Styrol-Acrylnitrilbasis.

Die anorganischen und/oder organischen Füllstoffe werden der Reaktionsmischung vorteilhafterweise in Mengen von 0,5 bis 50 Gew.%, vorzugsweise 1 bis 40 Gew.%, bezogen auf das Gewicht der Komponenten (a) bis (c), einverleibt.

Nähere Angaben über die obengenannten anderen üblichen Hilfs und Zusatzstoffe sind der Fachliteratur, beispielsweise der Monographie von J.H. Saunders und K.C. Frisch "High Polymers" Band XVI, Polyurethanes, Teil 1 und 2, Verlag Interscience Publishers 1962 bzw. 1964, oder dem Kunststoff-Handbuch, Band VII, Polyurethane 1. und 2. Auflage, Carl-Hanser-Verlag, München 1966 und 1983, zu entnehmen.

Zur Herstellung der Polyurethan-Elastomeren werden die organischen Polyisocyanate (a), höhermolekularen Verbindungen mit mindestens zwei reaktiven Wasserstoffatomen (b), die mit Amino-und/oder Hydroxylgruppen substituierten Harnstoffe und/oder Polyharnstoffe (c) und gegebenenfalls Kettenverlängerungs-und/oder Vernetzungsmitteln (d) in solchen Mengen zur Umsetzung gebracht, daß das Äquivalenz-Verhältnis von NCO-Gruppen der Polyisocyanate (a) zur Summe der reaktiven Wasserstoffatome der Komponenten (b), - (c) und gegebenenfalls (d) 1:0,85 bis 1,25, vorzugsweise 1:0,95 bis 1,15 und insbesondere 1:0,98 bis 1,05 beträgt.

Die Herstellung der Polyurethan-Elastomeren erfolgt nach dem Prepolymer-oder dem one shot-Verfahren, vorzugsweise mit Hilfe der bekannten Niederdruck-Verfahrenstechnik durch Einbringen der Reaktionsmischung in ein offenes Formwerkzeug, das gegebenenfalls nach dem Füllen bis zum Erreichen einer ausreichenden Anfangsfestigkeit - (Greenstrength) des Formteils geschlossen wird.

Bei Verwendung einer Mischkammer mit mehreren Zulaufdüsen können die Ausgangskomponenten einzeln zugeführt und in der Mischkammer intensiv vermischt werden. Als besonders vorteilhaft hat es sich erwiesen, nach dem Zweikomponenten-Verfahren zu arbeiten und die substituierten Harnstoffe und/oder Polyharnstoffe - (c) und gegebenenfalls Kettenverlängerungs-und/oder Vernetzungsmittel (d) in den höhermolekularen Verbindungen mit mindestens zwei reaktiven Wasserstoffatomen (b) zu lösen und mit dem Katalysator (e) sowie gegebenenfalls Treibmittel (f), Hilfsmitteln und/oder Zusatzstoffen - (g) in der Komponente (A) zu vereinigen und als Komponente (B) die organischen Polyisocyanate - (a), vorzugsweise die modifizierten organischen Polyisocyanate und/oder NCO-Gruppen enthaltenden Prepolymeren zu verwenden. Vorteilhaft ist hierbei beispielsweise, daß die zwei Komponenten bei der Verarbeitung nur noch in den entsprechenden Mengen gemischt werden müssen.

Die Menge des in das Formwerkzeug eingebrachten Reaktionsgemisches wird so bemessen, daß die kompakten Polyurethan-Elastomeren eine Dichte von 0,9 bis 1,4 g/cm³, vorzugsweise von 1,0 bis 1,2 g/cm³ besitzen, wobei gegebenenfalls zellige Elastomere gebildet werden können, beispielsweise durch in das Reaktionsgemisch eingeschlagene Gase, insbesondere Luft oder durch Verwendung von feuchten Ausgangsstoffen (b) bis (d) und die zelligen Polyurethan-Elastomeren, die durch gezielte Zugabe von Wasser oder Wasser und inerte physikalisch wirkende Treibmittel erhalten werden, eine Dichte von 0,3 bis 0,8 g/cm³, vorzugsweise von 0,45 bis 0,70 g/cm³ aufweisen. Die Ausgangskomponenten werden mit einer Temperatur von 15 bis 70°C, vorzugsweise von 20 bis 60°C in das Formwerkzeug, das zweckmäßigerweise aus metallischen Werkstoffen besteht und temperierbar ist, eingebracht. Die Formwerkzeugtemperatur beträgt üblicherweise 20 bis 90°C, vorzugsweise 25 bis 65°C. Gegebenenfalls kann es vorteilhaft sein, übliche Formtrennmittel, beispielsweise auf Wachs-oder Silikonbasis, zur Verbesserung der Entformung, einzusetzen. Die Verdichtungsgrade zur Herstellung von Formkörpern aus zelligen Polyurethan-Elastomeren liegen zwischen 1,1 und 10, vorzugsweise zwischen 2 und 6.

Die nach dem erfindungsgemäßen Verfahren erhältlichen kompakten Polyurethan-Elastomeren eignen sich zur Verwendung in der Automobilindustrie, beispielsweise als Stoßstangenabdeckungen und Karosserieteile wie Kotflügel, Spoiler und Radkästenverbreiterungen sowie technische Gehäuseteile und Laufrollen, die zelligen Polyurethan-Elastomeren finden beispielsweise als Armlehnen, Kopfstützen, Sicherheitsabdeckungen im Automobilinnenraum sowie als Motorrad-und Fahrradsättel, Sitzkissen, Deckschichten in Verbundschaumstoffen und insbesondere mit Dichten von 0,30 bis 0,70 g/cm³ als Schuhsohlen Anwendung.

Die in den Beispielen genannten Teile beziehen sich auf das Gewicht.

Beispiel 1

Herstellung eines Aminogruppen aufweisenden Harnstoffs:

100 Gew.-Teile eines Butandiol-1,4-Ethylenglykolpolyadipats mit einer Hydroxylzahl von 56 und

0,5 Gew.-Teile (0,0043 Mol) 1,6-Hexamethylendiamin

wurden bei Raumtemperatur unter Rühren gemischt und auf 50°C bis zum vollständigen Lösen des Diamins erwärmt. Bei dieser Temperatur wurden 0,546 Gew.-Teile (0,00216 Mol) 4,4'-Diphenylmethan-diisocyanat hinzugefügt und zur Vervollständigung der Umsetzung 1 Stunden gerührt. Danach ließ man die Reaktionsmischung abkühlen.

Beispiel 2

Herstellung eines Hydroxylgruppen aufweisenden Harnstoffs:

Man verfährt analog den Angaben von Beispiel 1, verwendet jedoch anstelle 1,6-Hexamethylen-diamin 1,0 Gew.-Teile (0,0112 Mol) 2-Amino-2-methyl propanol-1 und 1,405 Gew.-Teile (0,0056 Mol) 4,4'-Diphenylmethan-diisocyanat.

Beispiel 3

Herstellung eines zelligen Polyurethan-Elastomeren:

A-Komponente: Mischung aus

88 Gew.-Teilen der Harnstoff-Polyester-polyol-Mischung nach Beispiel 1,

8,95 Gew.-Teilen Ethylenglykol,

0,08 Gew.-Teilen Wasser,

0,17 Gew.-Teilen Schaumstabilisator auf Basis eines Silikonöls,

1,0 Gew.-Teilen Triethylen-diamin (33 gew.%ige Lösung in Ethylenglykol) und

1,8 Gew.-Teilen Trichlor-trifluorethan
B-Komponente:

NCO-Gruppen enthaltendes Prepolymeres mit einem NCO-Gehalt von 18,7 Gew.%, hergestellt durch Umsetzung von 65 Gew.-Teilen 1,4-Butandiol-Ethylenglykol-polyadipat (OH-Zahl 56) mit 100 Gew.-Teilen 4,4'-Diphenylmethan-diisocyanat.

100 Gew.-Teile der A-Komponente und 92 Gew.-Teile der B-Komponente -entsprechend einem[NCO-Index von 100 -wurden mit Hilfe einer Niederdruck-Dosiermaschine vom Typ F20 der Elastogran Maschinenbau bei 40°C gemischt.

260 g der erhaltenen Reaktionsmischung wurden in eine auf 45°C temperiertes Metallformwerkzeug mit den Abmessungen 200 × 200 × 10 mm eingetragen und in dem geschlossenen Formwerkzeug aushärten gelassen. Die Formstandzeit betrug 300 Sek.

An der erhaltenen Prüfplatte wurden die folgenden mechanischen Eigenschaften gemessen:

| Dichte | [g/cm³] | 0,65 |
|---|---|---|
| Wärmeformbeständigkeit* | [°C] | 162 |
| Reißfestigkeit | [N/mm²] | 15,8 |
| Weiterreißwiderstand | [N/mm] | 13,7 |
| Dehnung | [%] | 450 |
| Härte | [Shore A] | 76 |

(* Torsionsmodulmessung bei G' ($\hat{=}$ 1 N/mm²); gemessen wurde die Temperatur, bei der die Torsionsmodulkurve die 10⁰ Linie schneidet)

**Beispiel 4**

Herstellung eines zelligen Polyurethan-Elastomeren:

A-Komponente: analog Beispiel 3, wobei jedoch anstelle der nach Beispiel 1 hergestellten Harnstoff-Polyester-polyol-Mischung, die nach Beispiel 2 erhalten eingesetzt wurde.

B-Komponente: analog Beispiel 3

100 Gew.-Teile der A-Komponente und 98 Gew.-Teile der B-Komponente -entsprechend einem NCO-Index von 100 -wurden analog den Angaben des Beispiels 3 zu Prüfplatten verarbeitet. Die Formstandzeit betrug 300 Sek.

An den erhaltenen Prüfplatte wurden die folgenden mechanischen Eigenschaften gemessen:

| Dichte | $[g/cm^3]$: | 0,65 |
|---|---|---|
| Wärmeformbeständigkeit* | $[^0C]$: | 152 |
| Reißfestigkeit | $[N/mm^2]$ | 10,0 |
| Weiterreißwiderstand | $[N/mm]$ | 13,7 |
| Dehnung | $[\%]$ | 460 |
| Härte | $[Shore\ A]$ | 77 |

**Vergleichsbeispiel I**

A-Komponente: analog Beispiel 3, wobei jedoch anstelle der Harnstoff-Polyester-polyol-Mischung ein 1,4-Butandiol-Ethylenglykol-polyadipat mit einer Hydroxylzahl von 56 verwendet wurde.

B-Komponente: analog Beispiel 3

100 Gew.-Teile der A-Komponente und 98 Gew.-Teile der B-Komponente -entsprechend einem NCO-Index von 100 -wurden analog den Angaben des Beispiels 3 zu Prüfplatten verarbeitet. Die Formstandzeit betrug 300 sek.

An der Prüfplatte wurden die folgenden mechanischen Eigenschaften gemessen:

| Dichte | $[g/cm^3]$: | 0,65 |
|---|---|---|
| Wärmeformbeständigkeit* | $[^0C]$ | 130 |
| Reißfestigkeit | $[N/mm^2]$ | 11,0 |
| Weiterreißfestigkeit | $[N/mm]$ | 14,0 |
| Dehnung | $[\%]$ | 420 |
| Härte | $[Shore\ A]$ | 75 |

**Ansprüche**

1. Verfahren zur Herstellung von kompakten oder zelligen Polyurethan-Elastomeren durch Umsetzung von

a) organischen Polyisocyanaten mit

b) höhermolekularen Verbindungen mit mindestens 2 reaktiven Wasserstoffatomen und gegebenenfalls

d) Kettenverlängerungs-und/oder Vernetzungsmitteln in Gegenwart von

e) Katalysatoren und gegebenenfalls

f) Treibmitteln,

g) Hilfsmitteln und/oder Zusatzstoffen,

dadurch gekennzeichnet , daß man zusätzlich als Aufbaukomponente (c) mit Amino-und/oder Hydroxylgruppen substituierte Harnstoffe und/oder Polyharnstoffe mitverwendet.

2. Verfahren nach Anspruch 1, dadurch gekennzeichnet , daß man die mit Amino-und/oder Hydroxylgruppen substituierten Harnstoffe und/oder Polyharnstoffe (c) in einer Menge von 0,01 bis 15 Gew.-Teilen bezogen auf 100 Gew.-Teile der höhermolekularen Verbindungen mit mindestens 2 reaktiven Wasserstoffatomen (b) mitverwendet.

3. Verfahren nach Anspruch 1, dadurch gekennzeichnet, daß die mit Amino-und/oder Hydroxylgruppen substituierten Harnstoffe und/oder Polyharnstoffe ein Molekulargewicht von 200 bis 4000 besitzen und hergestellt werden durch Umsetzung von organischen Diisocyanaten mit primären aliphatischen und/oder cycloaliphatischen Diaminen und/oder Alkanolaminen.

4. Verfahren nach Anspruch 1, dadurch gekennzeichnet, daß die mit Amino-und/oder Hydroxylgruppen substituierten Harnstoffe und/oder Polyharnstoffe ein Molekulargewicht von 200 bis 4000 besitzen und hergestellt werden durch Umsetzung von aromatischen Diisocyanaten mit primären aliphatischen und/oder cycloaliphatischen Diaminen mit 2 bis 12 Kohlenstoffatomen im (Cyclo)-alkylenrest und/oder Alkanolaminen mit 2 bis 12 Kohlenstoffatomen im Alkylenrest im Molverhältnis 1:1,1 bis 1:2.

6. Verfahren nach Anspruch 1, dadurch gekennzeichnet, daß die mit Amino-und/oder Hydroxylgruppen substituierten Harnstoffe und/oder Polyharnstoffe ein Molekulargewicht von 200 bis 4000 besitzen und hergestellt werden durch Umsetzung von aromatischen Diisocyanaten mit primären aliphatischen und/oder cycloaliphatischen Diaminen und/oder Alkanolaminen in Gegenwart von Polyester-oder Polyether-polyolen.

6. Verfahren nach Anspruch 1, dadurch gekennzeichnet, daß man als organische Polyisocyanate (a) verwendet:

i) NCO-Gruppen enthaltende Prepolymere mit einem NCO-Gehalt von 25 bis 9 Gew.%, bezogen auf das Gesamtgewicht und/oder

ii) modifizierte Urethangruppen enthaltende organische Polyisocyanate mit einem NCO-Gehalt von 33,6 bis 15 Gew.%, bezogen auf das Gesamtgewicht.

7. Verfahren nach Anspruch 1, dadurch gekennzeichnet, daß man als höhermolekulare Verbindungen mit mindestens 2 reaktiven Wasserstofatomen (b) Polyether-und/oder Polyester-polyole mit einer Funktionalität von 2 bis 4 und einem Molekulargewicht von 1200 bis 6000 verwendet.

8. Verfahren nach Anspruch 1, dadurch gekennzeichnet, daß man zur Herstellung der zelligen Polyurethan-Elastomeren als Treibmittel Wasser in einer Menge von 0,05 bis 1,0 Gew.-Teilen pro 100 Gew.-Teilen der Komponente (b) verwendet.

9. Verfahren nach Anspruch 1, dadurch gekennzeichnet, daß die kompakten oder zelligen Polyurethan-Elastomeren nach der Niederdruck-Verfahrenstechnik hergestellt werden.

10. Polyurethan-Elastomerschuhsohlen mit einer Dichte von 0,30 bis 0,70 g/cm³, hergestellt nach dem Verfahren gemäß Anspruch 1.

BASF Aktiengesellschaft

**BASF**

BASF Aktiengesellschaft · D-6700 Ludwigshafen

Europäisches Patentamt
Erhardtstraße 27

8000 München 2

```
E P A · E P O · O E B
M Ü N C H E N
Empfang bestätigt
Receipt acknowledged
Accusé reception

CO
```

22.8.1986

Patentabteilung - C6
ZNP/H - mb
Dr. Maurer
Tel. 0621/60 28185
Telex 17 62 157 170
Ttx 62 157 170=basf
Tfx 0621/60 43123

EP-Anm.-Nr. 86 109 485.2 - O.Z. 0050/37885

Es wird beantragt, in den Anmeldeunterlagen, Seite 17, Zeile 5
nach Regel 88 die Ziffer "6" in "5" zu berichtigen.

BASF Aktiengesellschaft

i.A. *Maurer*

i.A. Maurer
AV Nr. 3224

```
EPA-EPO-OEB
DG 1
Reçu le
0 1 0 9 1986
```

Telefon (06 21) 60-0 (Vermittlung)
Telex 4 64 99-0 bas d
Telegramme: BASF Ludwigshafenrhein
Bankverbindung: Landeszentralbank
6700 Ludwigshafen, Girokonto 545 07300

Sitz der Gesellschaft: D-6700 Ludwigshafen
Aufsichtsratsvorsitzender: Matthias Seefelder
Vorstand: Hans Albers, Vorsitzender;
Hans Detzer, stellv. Vorsitzender;
Detlef Dibbern; Helmut Dörfel;

Ronaldo Schmitz; Jürgen Strube;
Karl-August Wetjen; Herbert Willersinn;
Hans Joachim Witt
Registergericht: Amtsgericht Ludwigshafen,
Eintragungsnummer: HRB 2000